(19) Europäisches Patentamt
European Patent Office
Office européen des brevets

(11) **EP 3 964 068 B1**

(12) **EUROPEAN PATENT SPECIFICATION**

(45) Date of publication and mention
of the grant of the patent:
**05.08.2026 Bulletin 2026/32**

(21) Application number: **20840626.4**

(22) Date of filing: **03.07.2020**

(51) International Patent Classification (IPC):
*A01N 53/00* (2006.01)   *A01N 53/06* (2006.01)
*A01M 1/20* (2006.01)   *A01N 25/18* (2006.01)
*A01N 53/10* (2006.01)   *A01P 7/04* (2006.01)

(52) Cooperative Patent Classification (CPC):
(C-Sets available)
**A01N 53/00; A01P 7/04;** A01M 1/2066; Y02A 50/30
(Cont.)

(86) International application number:
**PCT/JP2020/026213**

(87) International publication number:
**WO 2021/010195 (21.01.2021 Gazette 2021/03)**

(54) **INSECTICIDAL EFFICACY ENHANCER, INSECT PEST CONTROL METHOD, AND WATER-BASED INSECTICIDAL COMPOSITION TO BE VAPORIZED AND DIFFUSED BY BEING HEATED**

INSEKTIZIDWIRKUNGSVERSTÄRKER, METHODE ZUR INSEKTENBEKÄMPFUNG UND WASSERBASIERTE INSEKTIZIDZUSAMMENSETZUNG ZUR VERDAMPFUNG UND VERTEILUNG DURCH ERHITZEN

RENFORCEMENT DE L'EFFICACITÉ INSECTICIDE, MÉTHODE DE LUTTE CONTRE LES INSECTES RAVAGEURS ET COMPOSITION INSECTICIDE À BASE D'EAU À VAPORISER ET À DIFFUSER PAR CHAUFFAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.07.2019 JP 2019129826**

(43) Date of publication of application:
**09.03.2022 Bulletin 2022/10**

(73) Proprietor: **DAINIHON JOCHUGIKU CO., LTD.
Osaka-shi
Osaka 550-0001 (JP)**

(72) Inventors:
• **MIYOSHI, Kazufumi
Toyonaka-shi, Osaka 561-0827 (JP)**
• **GEHO, Hirofumi
Toyonaka-shi, Osaka 561-0827 (JP)**
• **KASHIMA, Seiichi
Toyonaka-shi, Osaka 561-0827 (JP)**

• **KAWAJIRI, Yumi
Toyonaka-shi, Osaka 561-0827 (JP)**
• **NAKAYAMA, Koji
Toyonaka-shi, Osaka 561-0827 (JP)**

(74) Representative: **Cabinet Beau de Loménie
103, rue de Grenelle
75340 Paris Cedex 07 (FR)**

(56) References cited:
EP-A1- 3 409 117       WO-A1-2016/140172
WO-A1-2017/130920       WO-A1-2017/130920
WO-A1-2017/130921       JP-A- H 037 207
JP-A- H04 173 711       JP-A- H07 316 002
JP-A- H07 316 002

• MATSUO, NORITADA ET AL.: "Discovery and Development of a Novel Pyrethroid Insecticide 'Metofluthrin (SumiOne, Eminence)", R&D REPORTS "SUMITOMO KAGAKU", 2005, pages 1 - 15, XP055873670

EP 3 964 068 B1

(52) Cooperative Patent Classification (CPC): (Cont.)

C-Sets
**A01N 53/00, A01N 25/02, A01N 25/18, A01N 25/22,
A01N 25/34, A01N 53/00**

## Description

TECHNICAL FIELD

The present invention relates to a water-based insecticidal composition to be vaporized and diffused by being heated, which contains a pyrethroid insecticidal component with relatively high vapor pressure and to an insect pest control method using the water-based insecticidal composition to be vaporized and diffused by being heated, in which the insecticidal efficacy enhancer is blended.

BACKGROUND ART

Among flying-insect pest control products for controlling flying-insect pests such as mosquitoes are so-called "liquid mosquito killers", which are commercially available. Liquid mosquito killers adopt the technique of immersing an absorbent wick in a chemical liquid containing an insecticidal component, causing the absorbed chemical liquid to be transported to a top portion of the absorbent wick, and then heating the absorbent wick, thereby vaporizing and diffusing the insecticidal component into the atmosphere. Typical insecticidal components used for liquid mosquito killers are pyrethroid insecticidal components. Of pyrethroid insecticidal components, allethrin, prallethrin, furamethrin, and the like have been commonly used. However, in recent years, there has been a trend toward the use of newer insecticidal components such as transfluthrin, metofluthrin, and profluthrin, which have superior insecticidal activity.

Chemical liquids for use in liquid mosquito killers are roughly classified into oil-based formulations essentially containing kerosene and water-based formulations essentially containing water. Most of the conventional liquid mosquito killers have the oil-based formulation on a worldwide basis. However, the water-based formulation can reduce the risk of catching fire, compared to the oil-based formulation, and it is further said that its insecticidal effect on insect pests is equal to or greater than that of the oil-based formulation. Thus, the need for the water-based formulation is expected to increase in the near future.

As a conventional flying-insect pest control product having a water-based formulation, there is a water-based insecticide to be vaporized and diffused by being heated, which uses a chemical liquid containing a pyrethroid insecticidal component, a surfactant, and water (see, for example, Patent Document 1). The water-based insecticide to be vaporized and diffused by being heated in Patent Document 1 is utilized in the technique of using a thermal vaporization/diffusion absorbent wick to vaporize and diffuse the chemical liquid by heating. By blending the surfactant in the chemical liquid, the component composition of the chemical liquid maintains its balance, and the pyrethroid insecticidal component is vaporized and diffused stably over a long period of time.

As another conventional flying-insect pest control product with the water-based formulation, there is a water-based chemical to be vaporized and diffused by being heated, which contains a thermal vaporization/diffusion chemical, an organic solvent, and water (see, for example, Patent Document 2). In the water-based chemical to be vaporized and diffused by being heated in Patent Document 2, attempts are made to adjust the volatilization of the water-based chemical by considering various water-based organic solvents or water-based organic compounds as the components equivalent to the surfactant.

CITATION LIST

PATENT LITERATURE

    Patent Document 1: Japanese Unexamined Patent Application Publication No. H3-7207
    Patent Document 2: Japanese Unexamined Patent Application Publication No. H7-316002

For use with a liquid absorbing wick, each of EP 3 409 117 A1 and WO 2017/130920 A1 shows a composition to be vaporized and diffused which combines a glycol compound and a pyrethroid insecticidal component.

SUMMARY OF INVENTION

TECHNICAL PROBLEM

When using flying-insect pest control products indoors, in order to effectively enhance the pest control effect against flying-insect pests, the pyrethroid insecticidal component contained in evaporation particles vaporized/diffused from the products needs to be effectively in contact with flying-insect pests to eventually reach inside their bodies. As for the flying-insect pest control products with the water-based formulations, it is assumed that the pyrethroid insecticidal component contained in the evaporation particles is volatilized in balance with a surfactant (water-based organic solvent or water-based organic compound) and water.

In this regard, the water-based insecticide and chemical to be vaporized and diffused by being heated as described in Patent Documents 1 and 2, respectively, are designed to improve the vaporization/diffusion stability and adjust their volatilization in order to keep the concentration of pyrethroid insecticidal component constant. In other words, the conventional techniques, including those described in Patent Documents 1 and 2, only consider the vaporization/-diffusion performance of the insecticide and the chemical. They do not recognize issues caused by focusing on the pyrethroid insecticidal component itself contained in the evaporation particles, as well as the technical concept of enhancing the insecticidal efficacy by effectively bringing the pyrethroid insecticidal component into contact with flying-insect pests, at the time of the conventional techniques.

With the above problems in mind, the present invention has been made. It is an object of the present invention to effectively enhance the insecticidal efficacy of a pyrethroid insecticidal component with a relatively high vapor pressure, contained in a water-based insecticidal composition to be vaporized and diffused by being heated, to provide an insect pest control method and to provide a water-based insecticidal composition to be vaporized and diffused by being heated, in which the insecticidal efficacy of the pyrethroid insecticidal component is effectively enhanced.

SOLUTION TO PROBLEM

The present invention is defined in the claims and has been made based on findings that the following configurations exhibit excellent effects in achieving the above object.

EFFECTS OF INVENTION

The insecticidal efficacy enhancer used in and the insect pest control method of the present invention are extremely useful because they can contribute to the vaporization/diffusion stability and the adjustment of volatilization of the water-based insecticidal composition to be vaporized and diffused by being heated which contains the pyrethroid insecticidal component having the relatively high vapor pressure, and they can also effectively enhance the insecticidal efficacy of the pyrethroid insecticidal component contained in this water-based insecticidal composition. The water-based insecticidal composition to be vaporized and diffused by being heated of the present invention is very excellent as the insect pest control product and extremely useful in practice because it includes the insecticidal efficacy enhancer containing, as an active component, and the glycol compound used to enhance the insecticidal effect of the pyrethroid insecticidal component.

DESCRIPTION OF EMBODIMENTS

Hereinafter, an insecticidal efficacy enhancer, an insect pest control method, and a water-based insecticidal composition to be vaporized and diffused by being heated will be described. Note that the present invention is defined in the claims.

<Water-Based Insecticidal Composition to be Vaporized and Diffused by Being Heated>

The water-based insecticidal composition to be vaporized and diffused by being heated (hereinafter referred to as a "water-based insecticidal composition") of the present invention in which the insecticidal efficacy enhancer of the present invention is blended contains a pyrethroid insecticidal component that has a vapor pressure of $2 \times 10^{-4}$ to $1 \times 10^{-2}$ mmHg at 30°C. According to the present invention, the insecticidal efficacy enhancer that contains, as an active component, a glycol compound having a hydroxyl group bonded to each of two adjacent carbon atoms of an alkane having 4 to 7 carbon atoms is blended into the water-based insecticidal composition which contains the pyrethroid insecticidal component having a vapor pressure of $2 \times 10^{-4}$ to $1 \times 10^{-2}$ mmHg at 30°C, thereby making it possible to enhance the insecticidal efficacy of the water-based insecticidal composition.

<Pyrethroid Insecticidal Component>

Generally, pyrethroid insecticidal components include transfluthrin, metofluthrin, profluthrin, empenthrin, terallethrin, meperfluthrin, heptafluthrin, dimefluthrin, and 4-methoxymethyl-2,3,5,6-tetrafluorobenzyl-2,2-dimethyl-3-(2-chloro-2-trifluoromethylvinyl)cyclopropane carboxylate.

In consideration of the thermal vaporization/diffusion, the insecticidal efficacy, and the stability, transluthrin is preferable among those mentioned in claim 1. Pyrethroid insecticidal components may be used alone or two or more of them may be used in combination. In addition, if there are optical isomers or geometric isomers based on a chiral carbon in an acid portion or alcohol portion of the pyrethroid insecticidal component, these isomers are also included in the pyrethroid insecticidal component usable in the present invention.

The content of the pyrethroid insecticidal component in the water-based insecticidal composition to be vaporized and diffused by being heated is preferably 0.1 to 3.0% by mass, and more preferably 0.7 to 2.0% by mass. If the content of the pyrethroid insecticidal component is less than 0.1% by mass, the insecticidal efficacy may be degraded. On the other hand, if the content of the pyrethroid insecticidal component is more than 3.0% by mass, it may impair the properties of the water-based insecticidal composition.

<Insecticidal Efficacy Enhancer>

As a result of intensive research on the water-based insecticidal compositions to be vaporized and diffused by being heated, which contain the above pyrethroid insecticidal component, the inventors surprisingly have found that a certain glycol compound can be used as one component (water-based organic compound) of the water-based insecticidal composition and can also function as a component that enhances the insecticidal effect of the pyrethroid insecticidal component. That is, the present invention is also a use of, as the active component, the glycol compound having the hydroxyl group bonded to each of the two adjacent carbon atoms of the alkane having 4 to 7 carbon atoms.

<Glycol Compound>

Examples of the glycol compound include 1,2-butanediol (boiling point: 194°C), 1,2-pentanediol (boiling point: 210°C), 1,2-hexanediol (boiling point: 223°C), 3-methyl-1,2-butanediol (boiling point: 206°C), 2,3-butanediol (boiling point: 177°C), 4-methyl-2,3-pentanediol (boiling point: 190°C), and the like. Of these glycol compounds, 1,2-butanediol, 1,2-pentanediol, 1,2-hexanediol, and 3-methyl-1,2-butanediol, in each of which the two adjacent carbon atoms are assigned carbon position numbers of 1 and 2, are preferable, and 1,2-hexanediol is more preferable.

It is not clear why the glycol compound used in the present invention demonstrates an excellent enhancing effect of insecticidal efficacy when blended in the water-based insecticidal composition to be vaporized and diffused by being heated. However, this is considered to be because two hydroxyl groups in the molecular structure of the glycol compound which are positioned adjacent to each other form a hydrogen bond, thereby positively affecting the enhancing effect of the insecticidal efficacy of the pyrethroid insecticidal component to some extent.

In the water-based insecticidal composition to be vaporized and diffused by being heated in which the glycol compound is blended, the content of the glycol compound as the insecticidal efficacy enhancer in the water-based insecticidal composition is preferably 2 to 70% by mass, and more preferably 6 to 60% by mass. If the content of the glycol compound is less than 2% by mass, a sufficient enhancing effect of the insecticidal efficacy may not be obtained. On the other hand, even if the content of the glycol compound is more than 70% by mass, there are limitations on the insecticidal effect on flying-insect pests and the effect of preventing the invasion of insect pests indoors, and further the risk of catching fire increases, which may impair the merits of the water-based formulation.

<Water-based Organic Compound>

The water-based insecticidal composition to be vaporized and diffused by being heated for use in the present invention uses water as a solvent to configure the water-based formulation, and the water-based organic compound(s) is/are further blended therein so as to solubilize the pyrethroid insecticidal component. By configuring the water-based formulation in this way, it is said that the insecticidal effect on insect pests of the water-based formulation becomes equal to or greater than that of the oil-based formulation, while the risk of catching fire can be reduced, compared to the oil-based formulation. The water-based organic compound to be blended for configuring the water-based formulation is assumed to have the following features: (1) it can solubilize the pyrethroid insecticidal component; (2) it has the thermal vaporization/diffusion; and (3) it is vaporized and diffused by being heated while maintaining the ratio of three components, i.e., the pyrethroid insecticidal component, water, and the water-based organic compound, at a constant value by being intervened between the pyrethroid insecticidal component and water. In the present invention, the glycol compound functioning as the insecticidal efficacy enhancer may be blended to be the whole water-based organic compound or part of the water-based organic compounds, depending on its solubilization ability and the like for the pyrethroid insecticidal component. In addition, other compounds, such as glycol ether compounds, may be used together with the above glycol compound to form the water-based organic compounds. Glycol ether compounds are excellent in the thermal vaporization/diffusion and solubilization ability of the pyrethroid insecticidal component, and they are shown as main water-based organic compounds (also called surfactants or water-based organic solvents) in Patent Documents 1 and 2. In the present invention, the glycol ether compound is also useful as a complementary component to the glycol compound.

<Glycol Ether Compound>

The glycol ether compound preferably has a boiling point of 150 to 300°C, and more preferably 170 to 260°C. Examples of the glycol ether compound include diethylene glycol monoethyl ether (boiling point: 202°C, hereinafter referred to as DEME), diethylene glycol monoisopropyl ether (boiling point: 207°C, hereinafter referred to as DEMIP), diethylene glycol monobutyl ether (boiling point: 231°C, hereinafter referred to as DEMB), diethylene glycol monoisobutyl ether (boiling point: 220°C, hereinafter referred to as DEMIB), diethylene glycol monohexyl ether (boiling point: 259°C, hereinafter referred to as DEMH), diethylene glycol mono2-ethylhexyl ether (boiling point: 272°C), diethylene glycol monophenyl ether (boiling point: 283°C), triethylene glycol monomethyl ether (boiling point: 249°C), propylene glycol mono-tertiary butyl ether (boiling point: 151°C), dipropylene glycol monomethyl ether (boiling point: 188°C), dipropylene glycol monopropyl ether (boiling point: 210°C, hereinafter referred to as DPMP), 3-methoxy-1,2-propanediol (boiling point: 220°C), 3-methoxy-3-methylbutanol (boiling point: 174°C, hereinafter referred to as Sol-fit), and the like. Of these glycol ether compounds, diethylene glycol monoethyl ether, diethylene glycol monoisopropyl ether, diethylene glycol monobutyl ether, diethylene glycol monoisobutyl ether, diethylene glycol monohexyl ether, dipropylene glycol monomethyl ether, dipropylene glycol monopropyl ether, and 3-methoxy-3-methylbutanol are preferable. The above-mentioned glycol ether compounds may be used alone or two or more of them may be used in combination.

The content of the water-based organic compound(s) in the water-based insecticidal composition to be vaporized and diffused by being heated is preferably 10 to 70% by mass, and more preferably 30 to 60% by mass. If the content of the water-based organic compounds is less than 10% by mass, it may interfere with the water-based formulation. In addition, the flying-insect pest control effect is not sustainable. On the other hand, even if the content of the water-based organic compounds is more than 70% by mass, there are limitations on the insecticidal effect on flying-insect pests and the effect of preventing the invasion of insect pests indoors and further the risk of catching fire may be increased, which may impair the merits of the water-based formulation. Note that, of the water-based organic compounds, the glycol compound used as the insecticidal efficacy enhancer is preferably blended in the amount described below. In other words, the amount of the glycol compound blended in the water-based organic compound(s) is preferably 20 to 100% by mass. The amount of the glycol compound blended in the water-based insecticidal composition to be vaporized and diffused by being heated is preferably 2 to 70% by mass, and more preferably 6 to 60% by mass. Blending in this way enables the configuration of the water-based formulation while keeping the thermal vaporization/diffusion excellent, and further it can enhance the insecticidal effect.

In the water-based insecticidal composition to be vaporized and diffused by being heated, other components can be blended without departing from the spirit of the present invention that the glycol compound blended as the insecticidal efficacy enhancer serves to enhance the insecticidal efficacy of the pyrethroid insecticidal component. Examples of the other components that can be blended as appropriate include non-pyrethroid insect pest repellent components such as DEET, 1-methylpropyl 2-(2-hydroxyethyl)-1-piperidinecarboxylate (icaridin), and 3-(N-n-butyl-N-acetyl)aminopropionic acid ethyl ester (IR3535), terpene compounds such as citronellol, geraniol, linalool, p-menthane-3,8-diol, menthol, and menthone, natural essential oil with a repellent effect such as citronella oil, lavender oil, mentha oil, lemon eucalyptus oil, and peppermint oil, antibacterial agents such as isopropyl methylphenol, fungicides, stabilizing agents such as dibutylhydroxytoluene (BHT) and methyl parahydroxybenzoate, pH adjusters, colorants, deodorants such as tea extracts and tea leaf dry distilled solutions, and the like. During the preparation of the water-based insecticidal composition to be vaporized and diffused by being heated, lower alcohols such as ethanol and isopropanol, hydrocarbon solvents such as paraffin oil (kerosene), ester or ether solvents, solubilizers, and dispersants may be used as appropriate, in an amount that does not impair the advantage of configuring the water-based formulation, in addition to water.

<Insect Pest Control Method>

The water-based insecticidal composition to be vaporized and diffused by being heated, which has been prepared as described above, is loaded in a container body (not shown) including a thermal vaporization/diffusion absorbent wick, whereby the insect pest control product (liquid mosquito killer) is constructed. In other words, the thermal vaporization/diffusion absorbent wick is immersed into a liquid of the water-based insecticidal composition, causing the absorbed water-based insecticidal composition to be transported to the top portion of the absorbent wick, followed by heating at 80 to 150°C. This is applied to the insect pest control method of vaporizing and diffusing the pyrethroid insecticidal component into the atmosphere.

A chemical container that accommodates the water-based insecticidal composition to be vaporized and diffused by being heated is generally a plastic container made of polyolefin such as polypropylene, polyester, polyvinyl chloride, or the like. The absorbent wick is attached to the top of the chemical container via a stopper. In the water-based formulation, the material of the chemical container is preferably polyolefin-based plastic such as polypropylene in consideration of the properties of the glycol compound, the glycol ether-based compound, and the like.

\<Thermal Vaporization/Diffusion Absorbent Wick \>

Thermal vaporization/diffusion absorbent wicks for liquid mosquito killers are roughly classified into baked wicks, porous ceramic wicks, felt wicks, braided wicks, and bound wicks according to general classification. In the present invention, baked wicks, porous ceramic wicks, felt wicks, or braided wicks are preferably used, and baked wicks or porous ceramic wicks are more preferably used. Hereinafter, the case of using the baked wick or braided wick as the thermal vaporization/diffusion absorbent wick will be described. The material of the thermal vaporization/diffusion absorbent wick is not particularly limited as long as it is stable to the water-based insecticidal composition to be vaporized and diffused by being heated which contains the pyrethroid insecticidal component and is capable of absorbing a water-based solution by capillary action.

A baked wick is obtained by baking (a) an inorganic substance (inorganic powder, an inorganic binder, etc.), or preferably a mixture containing the above substance and (b) an organic substance (carbonaceous powder, an organic binder, etc.), at 600 to 2000°C. Specifically, there is a baked wick that is composed almost exclusively of (a) and a small amount of (b), but such a baked wick may be referred to as a porous ceramic wick.

The inorganic substance includes inorganic powder as an essential component, but may also include an inorganic binder as an auxiliary component, if necessary. Examples of the inorganic powder include mica, alumina, silica, talc, mullite, cordierite, zirconia, and the like. Of them, mica is a preferable material because it can form relatively uniform fine pores, especially in the absorbent wick for the liquid mosquito killer. The above inorganic powders may be used alone or two or more of them may be used in combination. The content of the inorganic powder in the thermal vaporization/diffusion absorbent wick is preferably 10 to 90% by mass, and more preferably 30 to 70% by mass. The form of the inorganic powder is preferably fine powder of 50 mesh or finer in terms of physical properties such as external appearance, liquid absorption capability, strength, and the like, unless the manufacturing process of the thermal vaporization/diffusion absorbent wick is accompanied by pulverization and other processes.

Examples of the inorganic binder include various kinds of clay such as kaolinite, bentonite, and halloysite, tar pitch, water glass, and the like. Of them, clay is a preferable material because it has good binding capability. The above inorganic binders may be used alone, or two or more of them may be used in combination. The content of the inorganic binder in the thermal vaporization/diffusion absorbent wick is preferably 5 to 50% by mass, and more preferably 10 to 40% by mass. The inorganic binder has poor binding action at room temperature, but exhibits sufficient binding action by being baked at a temperature between 600°C and 2000°C, so that it can be suitably used as the thermal vaporization/diffusion absorbent wick.

Examples of the organic substance include carbonaceous powders such as graphite, carbon black, activated carbon, charcoal, and coke, and organic binders such as carboxymethyl cellulose (CMC), acrylic resins, and polyolefin resins. Of them, graphite is a preferable material because it has a relatively uniform shape and contains fewer impurities. By blending a carbonaceous powder such as graphite or the like, the external appearance, color, liquid absorption capability, strength, and the like of the thermal vaporization/diffusion absorbent wick can be improved. The above carbonaceous powders or organic binders may be used alone, or two or more of them may be used in combination. The content of the organic substance in the thermal vaporization/diffusion absorbent wick is preferably 5 to 40% by mass. If the content is within this range, gas such as carbon monoxide or carbon dioxide is generated during baking of the thermal vaporization/diffusion absorbent wick to produce continuous pores in the thermal vaporization/diffusion absorbent wick, thus making it possible to form a porous structure that is sufficient to exert liquid absorption performance through capillary action.

Note that, in addition to the above substances, the thermal vaporization/diffusion absorbent wick may additionally contain a preservative, and an antioxidant such as 4,4'-methylene bis(2-methyl-6-t-butylphenol), stearyl-β-(3,5-di-t-butyl-4-hydroxyphenyl)propionate, or the like, as appropriate.

A braided wick is typically obtained by covering the outer peripheral surface of a core member with a sheath material for absorbing and vaporizing the water-based insecticidal composition, where the sheath material is formed as an aggregation of at least one fiber selected from natural fibers, synthetic fibers, and inorganic fibers. In braided wicks, the core member has the function of retaining the shape of the thermal vaporization/diffusion absorbent wick. The materials for the core member do not necessarily need to have the function of absorbing the water-based insecticidal composition to be vaporized and diffused by being heated. The core member may be made of, for example, a thermoplastic and/or thermosetting synthetic resin that can withstand temperatures of 130°C or higher. Note that, in order to enhance the function of retaining the shape, the thermoplastic and/or thermosetting synthetic resin of the core member can also be reinforced using, as a reinforcing material for the core member, a fibrous reinforcing material such as glass fiber, ceramic fiber or carbon fiber, a powder reinforcing material such as glass powder and inorganic filler including silica, alumina or titanium oxide, or the like.

The sheath material is usually formed as the aggregation of fibers. The fiber constituting this is, for example, one or more of natural fibers such as cotton, synthetic fibers such as polypropylene, polyester, nylon, and aramid, inorganic fibers such as glass fiber and carbon fiber. Synthetic fibers that can withstand temperatures of 130°C or higher, such as polypropylene, polyester, nylon, and aramid, are preferable. This kind of aggregation of fibers is typically made of a fiber material in the form of braid, woven fabric, knitted fabric, felt, nonwoven fabric, or the like. In this case, the fiber material may be treated with a surfactant to adjust its liquid absorption speed. In addition, the surface of the sheath material may be further covered with a varnish or the like, or may be treated to impart a function such as hydrophilicity or the like thereto.

The thermal vaporization/diffusion absorbent wick obtained in this way is applied to a liquid product in which a water-based insecticidal composition is vaporized and diffused by being heated via the thermal vaporization/diffusion absorbent wick. Specifically, the water-based insecticidal composition to be vaporized and diffused by being heated is accommodated in the chemical container, and a lower portion of the thermal vaporization/diffusion absorbent wick is immersed in the water-based insecticidal composition via the stopper. Thereafter, the water-based insecticidal composition, which is configured to be vaporized and diffused by being heated in the chemical container, is transported to the top portion of the thermal vaporization/diffusion absorbent wick, and is then heated to 60 to 130°C by a heat generator provided at an upper portion of a thermal vaporization/diffusion device, so that it is vaporized and diffused into the atmosphere. The thermal vaporization/diffusion absorbent wick faces a hollow cylindrical heat dissipation cylinder that constitutes the heat generator with a spacing therebetween. Thus, the target surface temperature (for example, a temperature between 60°C and 130°C) of the top portion of the thermal vaporization/diffusion absorbent wick is achieved by setting the temperature of the heat generator to a higher temperature (for example, a temperature between 80°C and 150°C) than this. If the heating temperature of the water-based insecticidal composition to be vaporized and diffused by being heated is extremely high, the water-based insecticidal composition is more likely to be vaporized and diffused at an early stage, or the water-based insecticidal composition to be vaporized and diffused by being heated is more likely to undergo pyrolysis or polymerization, resulting in the formation of a highboiling-point substance on the surface of the thermal vaporization/diffusion absorbent wick, which may be accumulated to clog the absorbent wick. On the other hand, if the heating temperature is extremely low, the water-based insecticidal composition to be vaporized and diffused by being heated becomes difficult to vaporize and diffuse, failing to achieve sufficient insecticidal performance.

According to the inventors' study, it is confirmed that the positional relationship between the top portion (outer diameter: 6.7 to 7.3 mm) of the thermal vaporization/diffusion absorbent wick and an inner wall (inner diameter: 10 mm, height: 8 to 12 mm) of the heat dissipation cylinder facing this top portion is also involved indirectly in the invasion inhibition effect of insect pests provided by an insect pest control product. That is, when a is the length of the top portion of the thermal vaporization/diffusion absorbent wick facing the inner wall of the heat dissipation cylinder, and b is the height of the inner wall of the heat dissipation cylinder, the ratio (a/b) can be changed by vertically moving the top portion of the thermal vaporization/diffusion absorbent wick. In the insect pest control product according to the present invention, the above ratio (a/b) can be set within the range of 0.1 to 1.3. In this case, if the ratio (a/b) is more than 1.0, the top portion of the thermal vaporization/diffusion absorbent wick is in the state of protruding from the upper end of the heat dissipation cylinder. It is confirmed that if the ratio (a/b) is more than 1.0, the amount of vaporization/diffusion per unit time of the pyrethroid insecticidal component increases, but that the above ratio (a/b) is preferably set to 0.2 to 0.8, especially in a case where an increase in the amount of vaporization/diffusion of the water-based insecticidal composition is not needed.

The thermal vaporization/diffusion device used as the insect pest control product can be equipped with various functions and members in compliance with the conventional device, in addition to the above heat generator. A protective cap is placed on top of the heat generator for safety, and an opening is formed in its center, but the size and shape of the opening are arbitrary as long as the water-based insecticidal composition to be vaporized and diffused by being heated does not excessively condense in or adhere to the protective cap or a container body. For example, it is effective to hang a cylindrical vaporization/diffusion tube with an inner diameter of 10 to 30 mm from near the opening. In this case, the distance between the lower end of the vaporization/diffusion tube and the upper surface of the heat generator is usually preferably within the range of 1 to 5 mm in terms of heat resistance and vaporization/diffusion performance of the vaporization/diffusion tube part. The thermal vaporization/diffusion device may be equipped with a power cord connected to the heat generator, an on/off control switch, a pilot lamp, and the like, as appropriate.

The insect pest control method to which the present invention is applied exerts practical insecticidal efficacy not only on strains that are susceptible to pyrethroids, but also on strains that have reduced susceptibility, of insect pests in indoor spaces such as living rooms, lounges, and bedrooms, and this method also efficiently exerts the invasion inhibition effect of insect pests from the outdoors to the indoors. Examples of the insect pests include Culex such as Culex pipiens pallens, Culex tritaeniorhynchus, Culex quinquefasciatus, and Culex pipiens molestus, Aedes such as Aedes aegypti and Aedes albopictus, Chironomidae, and other flying-insect pests such as houseflies, drain flies, phorid flies, horseflies, black flies, and biting midges. In particular, this insect pest control method is extremely useful for mosquitoes because it has a remarkably excellent invasion inhibition effect of the mosquitoes.

EXAMPLES

Next, the usefulness of the insecticidal efficacy enhancer, the insect pest control method, and the water-based insecticidal composition to be vaporized and diffused by being heated of the present invention will be described based on Examples.

[Example 1]

<Water-Based Insecticidal Composition to be Vaporized and Diffused by Being Heated>

First, 0.9% by mass of transfluthrin as the pyrethroid insecticidal component, 40% by mass of 1,2-hexanediol which is the glycol compound as the insecticidal efficacy enhancer, 10% by mass of 3-methoxy-3-methylbutanol (Sol-fit) as the water-based organic compound, and 0.1% by mass of dibutyl hydroxytoluene (BHT) as the stabilizer were blended in 49% by mass of purified water to prepare a water-based insecticidal composition to be vaporized and diffused by being heated.

<Thermal Vaporization/Diffusion Absorbent Wick >

A thermal vaporization/diffusion absorbent wick (a round bar having a diameter of 7 mm and a length of 66 mm) was obtained by adding water to a mixture of 52% by mass of mica powder as the inorganic powder, 33% by mass of clay powder as the inorganic binder, 10% by mass of graphite as the organic substance, 3% by mass of carboxymethyl cellulose as the organic binder, and 2% by mass of starch, followed by kneading, and then extruding the kneaded mixture while applying pressure thereto, followed by air drying and subsequently baking at 1100°C.

<Insect Pest Control Product>

Forty-five mL of the water-based insecticidal composition to be vaporized and diffused by being heated was placed in a plastic container, and the thermal vaporization/diffusion absorbent wick was loaded into the container through the stopper. Then, the container was attached to a thermal vaporization/diffusion device [for example, a thermal vaporization/diffusion device described in Japanese Patent Publication No. 2926172, with a hollow cylindrical heat dissipation cylinder (inner diameter: 10 mm, height: 10 mm, surface temperature: 137°C) installed around the top portion of the absorbent wick], thereby producing an insect pest control product of Example 1. Note that the length of the top portion of the thermal vaporization/diffusion absorbent wick facing the inner wall of the heat dissipation cylinder was 0.7 times the height of the inner wall of the heat dissipation cylinder.

<Confirmation Test of Insect Pest Control Effect>

The insect pest control product of Example 1 was placed in the center of a 6-mat room (25 m$^3$), and then energized for 12 hours per day in a state where a window on one of the four sides of the room facing the outdoors was opened. As a result, mosquitoes did not enter the room through the window to bite people for 60 days (about 700 hours).

[Examples 2 to 16 and Comparative Examples 1 to 6]

In accordance with Example 1, a water-based insecticidal composition to be vaporized and diffused by being heated and a thermal vaporization/diffusion absorbent wick were prepared and loaded in a thermal vaporization/diffusion device, thereby fabricating insect pest control products of Examples 2 to 16. Of these, each insect pest control product of Examples 2 to 15 was subjected to the measurements and tests (1) to (3) described below. Also, insect pest control products of Comparative Examples 1 to 6, which were fabricated for comparison, were subjected to the same measurements and tests as those in Examples. The formulation of the water-based insecticidal composition to be vaporized and diffused by being heated and the composition of the thermal vaporization/diffusion absorbent wick in each Example and Comparative Example are shown separately in Tables 1 and 2. Note that Table 1 also describes the formulation of the water-based insecticidal composition to be vaporized and diffused by being heated and the composition of the thermal vaporization/diffusion absorbent wick of Example 1.

[Comparative Example 7]

For comparison with the insecticidal composition having the water-based formulation, the insecticidal composition having an oil-based formulation was prepared. Specifically, an insecticidal composition having an oil-based formulation (oil-based insecticidal composition to be vaporized and diffused by being heated) was obtained by preparing the formulation of the water-based insecticidal composition of Comparative Example 1 excluding the water-based organic compounds (glycol compound and glycol ether compound) and using kerosene instead of water. The thermal vaporization/diffusion absorbent wick used in the vaporization/diffusion of the oil-based insecticidal composition utilized a baked wick having the same composition as that of Comparative Example 1, and this absorbent wick was loaded in the heating vaporization/diffusion device and set as an insect pest control product of Comparative Example 7. The insect pest control product of Comparative Example 7 was also subjected to the same measurements and tests as those in the Examples.

[Table 1]

| | | Water-based insecticidal composition to be vaporized and diffused by heating (% by mass) | | | | | Thermal vaporization/diffusion absorbent wick | |
|---|---|---|---|---|---|---|---|---|
| | | Insecticidal component | Water-based organic compound | | Other component | Water | Type | Main composition (% by mass) |
| | | | Glycol | Glycol ether | | | | |
| Example | 1 | Transfluthrin 0.9 | 1,2-Hexanediol 40 | Solfit 10 | BHT 0.1 | balance | Baked | Mica powder 52 Clay powder 33 Graphite 10 Others |
| | 2 | Transfluthrin 0.9 | 1,2-Hexanediol 40 | — | BHT 0.1 | balance | Baked | Mica powder 50 Clay powder 36 Graphite 10 Others |
| | 3 | Metofluthrin 0.9 | 1,2-Hexanediol 40 | Solfit 10 | BHT 0.1 | balance | Baked | Mica powder 52 Clay powder 33 Graphite 10 Others |
| | 4 | Profluthrin 0.9 | 1,2-Hexanediol 40 | Solfit 10 | BHT 0.1 | balance | Baked | Mica powder 52 Clay powder 33 Graphite 10 Others |
| | 5 | Heptafluthrin 0.9 | 1,2-Hexanediol 40 | Solfit 10 | BHT 0.1 | balance | Baked | Mica powder 52 Clay powder 33 Graphite 10 Others |
| | 6 | Transfluthrin 0.9 | 1,2-Hexanediol 40 | DEMIB 10 | BHT 0.1 | balance | Baked | Talc powder 41 Bentonite 30 Coke 12 Others |
| | 7 | Transfluthrin 0.9 | 1,2-Pentanediol 30 | DEMIB 20 | BHT 0.1 | balance | Braided | Polyester /Polyamide |
| | 8 | Transfluthrin 0.9 | 1,2-Butanediol 30 | DPMP 20 | BHT 0.1 | balance | Braided | Polyester /Polypropylene |
| | 9 | Metofluthrin 0.7 | 2,3-Butanediol 20 | DEMB 50 | Fragrance 0.1 | balance | Braided | Polyester /Polyamide |
| | 10 | Meperfluthrin 1.1 | 1,2-Pentanediol 20 | Solfit 40 | BHT 0.1 | balance | Braided | Polyester /Polyamide |
| | 11 | Metofluthrin 0.7 | 1,2-Hexanediol 20 | Solfit 40 | BHT 0.1 | balance | Ceramic | Mullite Others |
| | 12 | Transfluthrin 0.9 | 1,2-Hexanediol 10 | DEMIB 40 | BHT 0.1 | balance | Baked | Talc powder 48 Clay powder 30 Acrylic resin 10 Others |
| | 13 | Transfluthrin 0.9 | 1,2-Hexanediol 3 | DEMIB 47 | BHT 0.1 | balance | Baked | Talc powder 48 Clay powder 30 Acrylic resin 10 Others |
| | 14 | Dimefluthrin 0.12 terallethrin 0.8 | 4-Methyl-2,3-Pentanediol 10 | DEMH 25 DEME 25 | BHT 0.1 | balance | Ceramic | Mullite Cordierite Others |
| | 15 | Transfluthrin 1.5 | 1,2-Hexanediol 60 | — | BHT 0.1 | balance | Ceramic | Mullite Others |
| | 16 | Transfluthrin 0.9 | 1,2-Hexanediol 50 | — | BHT 0.1 | balance | Baked | Mica powder 52 Clay powder 33 Graphite 10 Others |

[Table 2]

| | | Water-based insecticidal composition to be vaporized and diffused by heating (% by mass) | | | | | Thermal vaporization/diffusion absorbent wick | |
|---|---|---|---|---|---|---|---|---|
| | | Insecticidal component | Water-based organic compound | | Other components | Water | Type | Main Composition (% by mass) |
| | | | Glycol | Glycol ether | | | | |
| Comparative Example | 1 | Transfluthrin 0.9 | – | DEMIB 50 | BHT 0.1 | Balance | Baked | Talc powder 48<br>Clay powder 30<br>Acrylic resin 10<br>Others |
| | 2 | Transfluthrin 0.9 | 1,6-Hexanediol 10 | DEMIB 40 | BHT 0.1 | Balance | Baked | Talc powder 48<br>Clay powder 30<br>Acrylic resin 10<br>Others |
| | 3 | Transfluthrin 0.9 | 1,2-Propanediol 10 | DEMIB 40 | BHT 0.1 | Balance | Baked | Talc powder 48<br>Clay powder 30<br>Acrylic resin 10<br>Others |
| | 4 | Transfluthrin 0.9 | 1,2-Decanediol 10 | DEMIB 40 | BHT 0.1 | Balance | Baked | Talc powder 48<br>Clay powder 30<br>Acrylic resin 10<br>Others |
| | 5 | d,d-T80-Prallethrin 1.0 | – | DEMIB 50 | BHT 0.1 | Balance | Baked | Talc powder 48<br>Clay powder 30<br>Acrylic resin 10<br>Others |
| | 6 | d,d-T80-Prallethrin 1.0 | 1,2-Hexanediol 10 | DEMIB 40 | BHT 0.1 | Balance | Baked | Talc powder 48<br>Clay powder 30<br>Acrylic resin 10<br>Others |

(1) Vaporization/diffusion performance

The insect pest control product sample was placed in the center of a 6-mat room (25 m$^3$) and heated by energization. In the initial stage of use (second day of use), evaporation particles were trapped using a silica gel packed column at a distance of 1 m above a thermal vaporization/diffusion device, followed by extracting an insecticidal component with acetone. Then, the amount of vaporization/diffusion per unit time of the insecticidal component was determined by gas chromatography analysis.

(2) Insecticidal Efficacy Test

Two plastic cylinders each having an inner diameter of 20 cm and a height of 43 cm were put on top of each other. Another cylinder having an inner diameter of 20 cm and a height of 20 cm (where insects to be tested were to be placed) was put on top of the stack of the two cylinders with a 16-mesh metal mesh being interposed between this cylinder and the stack. Still another cylinder having the same inner diameter and a height of 20 cm was put on top of the third cylinder with this cylinder and the third cylinder being partitioned from each other by the same type of 16-mesh metal mesh. The stack of the four cylinders was placed on a circular plate provided on a table with a rubber gasket being interposed between the cylinder stack and the circular plate. The circular plate had a 5-cm circular hole at the center thereof. An insect pest control product to be tested was placed over the circular hole and was then heated by energization. After three hours of the energization, approximately 20 adult female Culex pipiens pallens mosquitoes, which were to be tested, were released in the upper third cylinder. The number of tested insects which fell down to be flat on their back as time passed was counted to calculate the $KT_{50}$ value. After 20 minutes of exposure, all of the tested insects were collected. The mortality of the insects was examined 24 hours later. The insecticidal efficacy test was conducted at the initial stage of use (the second day of use) and the late stage of use (a few days before the expired date).

(3) Invasion Inhibition Rate

A window was provided at the boundary between two adjacent 10-mat rooms, which were sealed except for the window. An insect pest control product to be tested was placed in one of the rooms, where an observer stayed inside. The test product was heated by energization, and this room was set as a chemical treated area. Meanwhile, 100 adult female Culex pipiens pallens mosquitoes, which were to be tested, were released in the adjacent non-chemical insect releasing area. The number of tested insects that invaded the chemical treated area from the non-chemical insect releasing area through the window was examined by observing them for 60 minutes. To set a criterion for judging the effectiveness, a test without using any insect pest control products was conducted at an untreated control area in the same way as described above. The invasion inhibition test was conducted repeatedly twice, i.e., at the initial stage of use (the second day of use) and the late stage of use (a few days before the expired date) of the tested insect pest control product. The untreated control area was also tested twice in the same manner. For each area, the average number of invading insects was counted, and the invasion inhibition rate was calculated by the following formula.

$$\text{Invasion Inhibition Rate (\%)} = (C - T)/C \times 100$$

C: Average number of invading insects in the untreated control area for 60 minutes (number of insects)
T: Average number of invading insects in the chemical treated area for 60 minutes (number of insects)

The measurement and test results in each of Examples and Comparative Examples are shown in Table 3.

[Table 3]

| | | Vaporization/diffusion performance | Insecticidal efficacy test | | | | Invasion inhibition rate (%) | |
|---|---|---|---|---|---|---|---|---|
| | | Vaporization amount of insecticidal component (mg/h) | Initial stage of use | | Late stage of use | | Initial stage of use | Late stage of use |
| | | | $KT_{50}$(sec) | Mortality(%) | $KT_{50}$(sec) | Mortality(%) | | |
| Example | 1 | 0.58 | 87 | 100 | 90 | 100 | 100 | 100 |
| | 2 | 0.57 | 85 | 100 | 88 | 100 | 100 | 100 |
| | 3 | 0.48 | 98 | 100 | 107 | 100 | 98 | 90 |
| | 4 | 0.60 | 101 | 100 | 124 | 100 | 95 | 90 |
| | 5 | 0.54 | 97 | 100 | 105 | 100 | 98 | 94 |
| | 6 | 0.59 | 86 | 100 | 92 | 100 | 100 | 100 |
| | 7 | 0.58 | 90 | 100 | 95 | 100 | 100 | 100 |
| | 8 | 0.58 | 91 | 100 | 96 | 100 | 100 | 100 |
| | 9 | 0.37 | 102 | 100 | 114 | 100 | 96 | 90 |
| | 10 | 0.63 | 103 | 100 | 119 | 100 | 94 | 91 |
| | 11 | 0.38 | 95 | 100 | 106 | 100 | 98 | 92 |
| | 12 | 0.59 | 89 | 100 | 96 | 100 | 100 | 100 |
| | 13 | 0.60 | 101 | 100 | 118 | 98 | 100 | 98 |
| | 14 | Dimefluthrin 0.10 Terallethrin 0.51 | 114 | 100 | 133 | 100 | 96 | 90 |
| | 15 | 0.64 | 85 | 100 | 89 | 100 | 100 | 100 |
| Comparative Example | 1 | 0.56 | 104 | 98 | 130 | 96 | 100 | 95 |
| | 2 | 0.53 | 128 | 96 | 141 | 93 | 97 | 92 |
| | 3 | 0.58 | 106 | 97 | 134 | 94 | 96 | 93 |
| | 4 | 0.49 | 132 | 94 | 145 | 90 | 91 | 85 |
| | 5 | 0.60 | 107 | 97 | 133 | 93 | 65 | 48 |
| | 6 | 0.57 | 115 | 95 | 139 | 91 | 62 | 46 |
| | 7 | 0.54 | 139 | 94 | 142 | 87 | 71 | 50 |

From the results of Tables 1 to 3, it was confirmed that the insect pest control products (Examples 1 to 15) using the water-based insecticidal compositions to be vaporized and diffused by being heated, in which the insecticidal efficacy enhancer was blended, exerted stable vaporization/diffusion performance as in the conventional product (Comparative Example 1) in which only a glycol ether compound was blended as the water-based organic compound, but demonstrated a more excellent enhancing effect of the insecticidal efficacy, compared to the conventional product. In particular, the insect pest control products of Examples were confirmed to exhibit significant enhancing effects in terms of the knockdown effect and the invasion inhibition effect. Furthermore, when comparing the transfluthrin formulation (Example 1), the metofluthrin formulation (Example 3), the profluthrin formulation (Example 4), the heptafluthrin formulation (Example 5), and the meperfluthrin formulation (Example 10), these formulations exerted almost equal efficacy in terms of mortality, but the transfluthrin formulation had a high knockdown effect and was specifically superior in terms of the invasion inhibition effect. In addition, from the comparison of Example 12, Example 13, and Comparative Example 1, it was observed that when the water-based organic compound containing 20% or more by mass of glycol compound was used in the water-based insecticidal composition to be vaporized and diffused by being heated, this composition showed a tendency of enhancing the knockdown effect and the invasion inhibition effect, and therefore such a composition was found to be preferable.

Meanwhile, as water-based organic compounds contained in the water-based insecticidal compositions to be vaporized and diffused by being heated, 1,6-hexanediol (Comparative Example 2), in which two carbon atoms each having a hydroxyl group are not adjacent to each other, 1,2-propanediol (Comparative Example 3) having 3 carbon atoms, and 1,2-decanediol (Comparative Example 4) having 10 carbon atoms were not confirmed to enhance the insecticidal effect, even though they were glycol compounds. This enhancing effect of the insecticidal efficacy specific to the present invention was demonstrated especially in 1,2-hexanediol, which was a completely unexpected result, in contrast to the fact that 1,2-hexanediol showed the same volatilization adjustment effect as 1,6-hexanediol and 1,2-propanediol as described in Patent Document 2. Furthermore, in the case of using d.d-T80-prallethrin (Comparative Examples 5 and 6) where the vapor pressure of the pyrethroid insecticidal component deviated from the range of the present invention, the enhancing effect of the insecticidal efficacy observed in 1,2-hexanediol was not observed. The enhancing effect of the insecticidal efficacy specific to the present invention was confirmed to be extremely unique because this effect was exerted only in combination with the pyrethroid insecticidal component having the vapor pressure in a specific range. Moreover, in the case of the insecticidal composition with the oil-based formulation (Comparative Example 7) instead of the water-based formulation, a sufficient insecticidal effect was not obtained.

INDUSTRIAL APPLICABILITY

The present invention is usable for insect pest control products for humans and pets, but is also usable for other applications, such as acaricidal, antibacterial, antifungal, deodorizing, and antibromic applications.

**Claims**

1. A water-based insecticidal composition to be vaporized and diffused by being heated, the water-based insecticidal composition comprising:

    a pyrethroid insecticidal component having a vapor pressure of $2 \times 10^{-4}$ to $1 \times 10^{-2}$ mmHg at 30°C; and
    an insecticidal efficacy enhancer containing, as an active component, a glycol compound having a hydroxyl group bonded to each of two adjacent carbon atoms of an alkane having 4 to 7 carbon atoms,
    **characterized in that**
    the pyrethroid insecticidal component is at least one selected from the group consisting of transfluthrin, metofluthrin, profluthrin, meperfluthrin, heptafluthrin, dimefluthrin, and 4-methoxymethyl-2,3,5,6-tetrafluorobenzyl-2,2-dimethyl-3-(2-chloro-2-trifluoromethylvinyl)cyclopropane carboxylate.

2. The water-based insecticidal composition of claim 1, wherein the two adjacent carbon atoms of the alkane having the 4 to 7 carbon atoms are assigned carbon position numbers of 1 and 2.

3. The water-based insecticidal composition of claim 2, wherein the glycol compound is at least one selected from the group consisting of 1,2-butanediol, 1,2-pentanediol, and 1,2-hexanediol.

4. The water-based insecticidal composition of any one of claims 1 to 3,

    wherein the water-based insecticidal composition to be vaporized and diffused by being heated includes the pyrethroid insecticidal component, a water-based organic compound, and water, and
    wherein the water-based organic compound includes 20% or more by mass of the glycol compound.

5. The water-based insecticidal composition of claim 4, wherein the water-based organic compound further includes a glycol ether compound.

6. The water-based insecticidal composition of claim 5, wherein the glycol ether compound is at least one selected from the group consisting of diethylene glycol monoethyl ether, diethylene glycol monoisopropyl ether, diethylene glycol monobutyl ether, diethylene glycol monoisobutyl ether, diethylene glycol monohexyl ether, dipropylene glycol monomethyl ether, dipropylene glycol monopropyl ether, and 3-methoxy-3-methylbutanol.

7.  The water-based insecticidal composition of any one of claims 1 to 6, wherein the pyrethroid insecticidal component is transfluthrin.

8.  An insect pest control method using a thermal vaporization/diffusion absorbent wick, the method comprising the steps of:

    immersing a lower portion of the thermal vaporization/diffusion absorbent wick, into the water-based insecticidal composition of any one of claims 1 to 7; and
    heating the water-based insecticidal composition at 80 to 150°C after the water-based insecticidal composition absorbed from the lower portion of the absorbent wick is transported to a top portion of the absorbent wick, thereby vaporizing and diffusing the pyrethroid insecticidal component into atmosphere.

**Patentansprüche**

1.  Wasserbasierte Insektizidzusammensetzung, die durch Erhitzen zu verdampfen und zu diffundieren ist, wobei die wasserbasierte Insektizidzusammensetzung umfasst:

    eine Pyrethroid-Insektizidkomponente mit einem Dampfdruck von $2 \times 10^{-4}$ bis $1 \times 10^{-2}$ mmHg bei 30°C; und
    einen Insektizidwirksamkeitsverstärker, enthaltend als eine Wirkkomponente eine Glykolverbindung mit einer Hydroxylgruppe, die an jedes von zwei benachbarten Kohlenstoffatomen eines Alkans mit 4 bis 7 Kohlenstoffatomen gebunden ist,
    **dadurch gekennzeichnet, dass**
    die Pyrethroid-Insektizidkomponente mindestens eine ist, die aus der Gruppe bestehend aus Transfluthrin, Metofluthrin, Profluthrin, Meperfluthrin, Heptafluthrin, Dimefluthrin und 4-Methoxymethyl-2,3,5,6-tetrafluorbenzyl-2,2-dimethyl-3-(2-chlor-2-trifluormethylvinyl)cyclopropancarboxylat ausgewählt ist.

2.  Wasserbasierte Insektizidzusammensetzung nach Anspruch 1, wobei den zwei benachbarten Kohlenstoffatomen des Alkans mit den 4 bis 7 Kohlenstoffatomen die Kohlenstoffpositionsnummern 1 und 2 zugeordnet sind.

3.  Wasserbasierte Insektizidzusammensetzung nach Anspruch 2, wobei die Glykolverbindung mindestens eine ist, die aus der Gruppe bestehend aus 1,2-Butandiol, 1,2-Pentandiol und 1,2-Hexandiol ausgewählt ist.

4.  Wasserbasierte Insektizidzusammensetzung nach einem der Ansprüche 1 bis 3,

    wobei die wasserbasierte Insektizidzusammensetzung, die durch Erhitzen zu verdampfen und zu diffundieren ist, die Pyrethroid-Insektizidkomponente, eine wasserbasierte organische Verbindung und Wasser einschließt, und
    wobei die wasserbasierte organische Verbindung 20 Massen-% oder mehr der Glykolverbindung einschließt.

5.  Wasserbasierte Insektizidzusammensetzung nach Anspruch 4, wobei die wasserbasierte organische Verbindung ferner eine Glykoletherverbindung einschließt.

6.  Wasserbasierte Insektizidzusammensetzung nach Anspruch 5, wobei die Glykoletherverbindung mindestens eine ist, die aus der Gruppe bestehend aus Diethylenglykolmonoethylether, Diethylenglykolmonoisopropylether, Diethy-lenglykolmonobutylether, Diethylenglykolmonoisobutylether, Diethylenglykolmonohexylether, Dipropylenglykolmo-nomethylether, Dipropylenglykolmonopropylether und 3-Methoxy-3-methylbutanol ausgewählt ist.

7.  Wasserbasierte Insektizidzusammensetzung nach einem der Ansprüche 1 bis 6, wobei die Pyrethroid- Insektizidkomponente Transfluthrin ist.

8.  Insektenschädlingsbekämpfungsverfahren unter Verwendung eines absorbierenden Dochts mit thermischer Verdampfung/Diffusion, wobei das Verfahren die Schritte umfasst:

    Eintauchen eines unteren Teils des absorbierenden Dochts mit thermischer Verdampfung/Diffusion in die wasserbasierte Insektizidzusammensetzung nach einem der Ansprüche 1 bis 7; und
    Erhitzen der wasserbasierten Insektizidzusammensetzung bei 80 bis 150°C, nachdem die wasserbasierte Insektizidzusammensetzung, die von dem unteren Teil des absorbierenden Dochts absorbiert wurde, zu einem oberen Teil des absorbierenden Dochts transportiert wurde, wodurch die Pyrethroid-Insektizidkomponente in die Atmosphäre verdampft und diffundiert wird.

**Revendications**

1. Composition insecticide aqueuse destinée à être vaporisée et diffusée en étant chauffée, la composition insecticide aqueuse comprenant :

   un composant insecticide pyréthroïde ayant une pression de vapeur de $2 \times 10^{-4}$ à $1 \times 10^{-2}$ mm Hg à 30°C ; et un améliorateur d'efficacité insecticide contenant, en tant que principe actif, un composé glycol ayant un groupe hydroxyle lié à chacun de deux atomes de carbone adjacents d'un alcane ayant 4 à 7 atomes de carbone, **caractérisée en ce que**
   le composant insecticide pyréthroïde est au moins l'un choisi dans l'ensemble constitué par la transfluthrine, la métofluthrine, la profluthrine, la méperfluthrine, l'heptafluthrine, la diméfluthrine, et le carboxylate de 4-méthoxyméthyl-2,3,5,6-tétrafluorobenzyl-2,2-diméthyl-3-(2-chloro-2-trifluorométhylvinyl)cyclopropane.

2. Composition insecticide aqueuse selon la revendication 1, dans laquelle les deux atomes de carbone adjacents de l'alcane ayant 4 à 7 atomes de carbone ont les numéros de positions des carbones attribués 1 et 2.

3. Composition insecticide aqueuse selon la revendication 2, dans laquelle le composé glycol est au moins l'un choisi dans l'ensemble constitué par le 1,2-butanediol, le 1,2-pentanediol et le 1,2-hexanediol.

4. Composition insecticide aqueuse selon l'une quelconque des revendications 1 à 3,

   laquelle composition insecticide aqueuse destinée à être vaporisée et diffusée en étant chauffée inclut le composant insecticide pyréthroïde, un composé organique aqueux, et de l'eau, et
   dans laquelle le composé organique aqueux inclut 20 % en masse ou plus du composé glycol.

5. Composition insecticide aqueuse selon la revendication 4, dans laquelle le composé organique aqueux inclut en outre un composé éther de glycol.

6. Composition insecticide aqueuse selon la revendication 5, dans laquelle le composé éther de glycol est au moins l'un choisi dans l'ensemble constitué par l'éther monoéthylique de diéthylèneglycol, l'éther monoisopropylique de diéthylèneglycol, l'éther monobutylique de diéthylèneglycol, l'éther monoisobutylique de diéthylèneglycol, l'éther monohexylique de diéthylèneglycol, l'éther monométhylique de dipropylèneglycol, l'éther monopropylique de dipropylèneglycol, et le 3-méthoxy-3-méthylbutanol.

7. Composition insecticide aqueuse selon l'une quelconque des revendications 1 à 6, dans laquelle le composant insecticide pyréthroïde est la transfluthrine.

8. Méthode de lutte contre les insectes nuisibles utilisant une mèche absorbante à vaporisation/diffusion thermique, la méthode comprenant les étapes de :

   immersion d'une partie inférieure de la mèche absorbante à vaporisation/ diffusion thermique dans la composition insecticide aqueuse de l'une quelconque des revendications 1 à 7 ; et
   chauffage de la composition insecticide aqueuse à 80 à 150°C après que la composition insecticide aqueuse absorbée depuis la partie inférieure de la mèche absorbante a été transportée jusqu'à une partie supérieure de la mèche absorbante, ce qui ainsi vaporise et diffuse le composant insecticide pyréthroïde dans l'atmosphère.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H37207 A
- JP H7316002 A
- EP 3409117 A1
- WO 2017130920 A1
- JP 2926172 B